# EUROPEAN PATENT APPLICATION

(11) **EP 3 101 459 A1**
(43) Date of publication of application: **07.12.2016**
(21) Application number: 15172116.4
(22) Date of filing: 15.06.2015
(51) Int. Cl.: G02B 6/44

(54) **OPTICAL FIBER CABLE ASSEMBLIES AND METHODS OF FORMING THE SAME**

(30) Priority: 05.06.2015 US 201562171433 P
(71) Applicant: CCS Technology Inc., Wilmington, DE 19803 (US)
(72) Inventor: Skoczylas, Wojciech, 53-604 Wroclaw (PL); Tosik, Grzegorz, 98-113 Buczek (PL); Zujewski, Mateusz Tomasz, 91-520 Lodz (PL)
(74) Representative: Sturm, Christoph

(57) **Abstract**

An optical fiber cable assembly includes a cable having a plurality of optical fiber subunits (14) and an outer jacket (20) surrounding the plurality of optical fiber subunits. Each optical fiber subunit includes at least one optical fiber and has opposed first and second end portions (24a, 24b) that extend from respective first (22a) and second ends (22b) of the outer jacket. First and second sections(30, 32) of the outer jacket have a first outer layer of material that defines the outer jacket, and an intermediate section (34) of the outer jacket that is between the first and second sections has a second outer layer of material that defines the outer jacket. The second outer layer of material is different than the first outer layer of material.

## Description

### PRIORITY APPLICATION

This application claims the benefit of priority of U.S. Provisional Application Serial No. 62/171,433, filed on June 5, 2015.

### BACKGROUND

This disclosure relates generally to optical fibers, and more particularly optical fiber cable assemblies having unique cable jacket configurations.

Optical fibers are useful in a wide variety of applications, including the telecommunications industry for voice, video, and data transmissions. Because of the significant bandwidth of optical fibers, fiber optic cables can be made much smaller and lighter than copper cables of comparable (or even less) bandwidth capacity. Nevertheless, there is still a demand to make fiber optic cables even smaller and lighter. For example, it is often necessary to run fiber optic cables through small spaces and around tight corners during installation. Large and/or heavy cables can make this difficult. Additionally, in some environments, such as datacenters, a large number of fiber optic cables are used to interconnect pieces of equipment. Cable trays or other hardware may be used to support and manage the routing of the fiber optic cables. Thus, the number of fiber optic cables that can be deployed may be limited by the space constraints and weight capacity of the datacenter's hardware and equipment.

### SUMMARY

Embodiments of an optical fiber cable assembly (also referred to as a "fiber optic cable assembly" or simply "cable assembly") are disclosed. According to one embodiment, the optical fiber cable assembly includes a cable having a plurality of optical fiber subunits and an outer jacket surrounding the plurality of optical fiber subunits. Each optical fiber subunit includes at least one optical fiber and has opposed first and second end portions that extend from respective first and second ends of the outer jacket. A plurality of optical connectors are mounted the optical fibers of the optical fiber subunits to terminate the at least one optical fiber of each optical fiber subunit. Additionally, first and second sections of the outer jacket have a first outer layer of material that defines the outer jacket. An intermediate section of the outer jacket that is between of the first and second sections has a second outer layer of material that defines the outer jacket. The second outer layer of material is different than the first outer layer of material. In some embodiments, the second outer layer of material is configured such that the intermediate section of the outer jacket has an outer diameter less than the opposed end sections of the outer jacket.

Methods of forming an optical fiber cable assembly, such as the cable assembly mentioned above, are also disclosed. According to one embodiment, the optical fiber cable assembly is constructed like the embodiment mentioned above. Thus, such a method involves: a) applying the second outer layer of material to the plurality of optical fiber subunits to form the intermediate section of the outer jacket, and b) applying the first outer layer of material to the plurality of optical fiber subunits to form the opposed end sections of the outer jacket.

Additional features and advantages will be set forth in the detailed description which follows, and in part will be readily apparent to those skilled in the technical field of optical communications. It is to be understood that the foregoing general description, the following detailed description, and the accompanying drawings are merely exemplary and intended to provide an overview or framework to understand the nature and character of the claims.

### BRIEF DESCRIPTION OF THE DRAWINGS

The accompanying drawings are included to provide a further understanding, and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a perspective view of a portion of a cable assembly according to one embodiment.
Fig. 2 is a cross-sectional view of a cable assembly according to another embodiment.
Fig. 3 is a schematic view of a cable assembly having a conventional design.
Fig. 4 is a schematic view of a cable assembly, such as the cable assembly of Fig. 1, having a design according to one embodiment of this disclosure.
Fig. 5 is a perspective view of the cable assembly of Fig. 4.
Fig. 6 is a perspective view of a portion of a cable assembly according to one embodiment of this disclosure.
Figs. 7 and 8 are perspective views of an end of a first section of an outer jacket in the cable assembly of Fig. 6, illustrating how the end may be formed.
Fig. 9 is an enlarged perspective view of a portion of the cable assembly of Fig. 5.

### DETAILED DESCRIPTION

Various embodiments will be further clarified by examples in the description below. In general, the description relates to optical fiber cable assemblies and methods of forming the same. The optical fiber cable assemblies may be trunks or harnesses used in data center environments, although the present disclosure may apply to other types of cables and environments or uses.

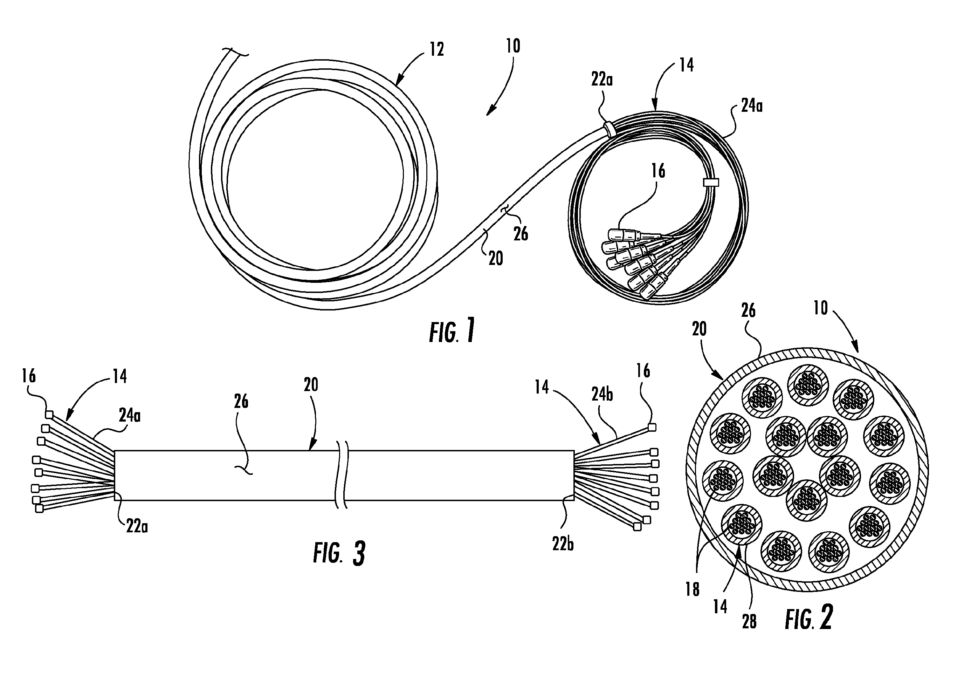

With reference to Fig. 1, one example of an optical fiber cable assembly 10 (hereinafter "cable assembly 10") is partially shown. The cable assembly 10 includes a fiber optic cable 12 comprised of various optical fiber subunits 14 terminated with optical connectors 16. More specifically, each optical fiber subunit 14 includes at least one optical fiber 18 (Fig. 2) to which one of the optical connectors 16 is mounted and a subunit jacket 28 surrounding the optical fiber(s). The optical fiber(s) 18 may contain a core, a cladding surrounding the core, one or more polymer coatings applied over the cladding, and-in some embodiments-a buffer coating of polyvinylchloride or the like surrounding the outermost polymer coating. The optical connectors 16 may be single-fiber optical connectors or multi-fiber optical connectors, depending on the number of optical fibers within each optical fiber subunit 14. The optical connectors 16 may be, for example, LC, SC, or MPO-type connectors (such as MTP® connectors).

An outer jacket 20 surrounds the optical fiber subunits 14. In the illustrated embodiment, the optical fiber subunits 14 extend from a first end 22a of the outer jacket 20 so as to have an exposed or "free" end portion 24a. Any number of optical fiber subunits 14 may be provided. Fig. 2, for example, illustrates an alternative embodiment in which the cable assembly 10 includes sixteen optical fiber subunits 14 surrounded by the outer jacket 20, with each optical fiber subunit 14 including twelve optical fibers. The outer jacket 20 in the embodiments of Figs. 1 and 2 defines an exterior surface 26 of the cable 12 (i.e., an outer surface of the outer jacket 20 is the exterior surface 26 of the cable 12); there is no additional outer sheath. Although not shown in any of the drawings, the cable 12 may also include one or more strength members, such as strands of aramid yarn between the optical fiber subunits 14. There may even be one or more strength members within the optical fiber subunits 14 themselves in some embodiments, if desired.

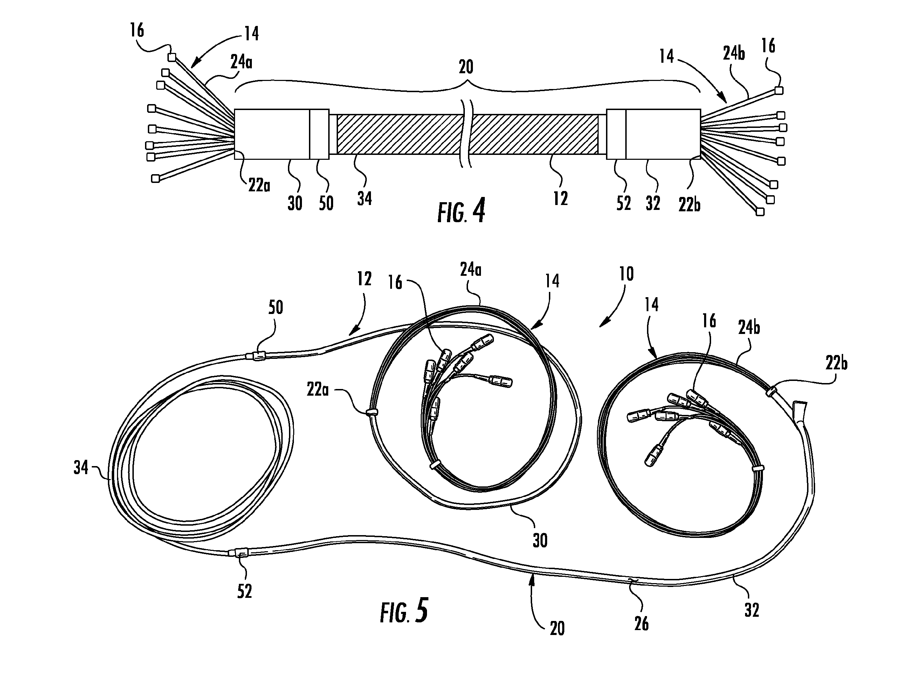

Referring back to Fig. 1, only one end of the cable assembly 10 is shown. The cable assembly 10 may have an opposite end constructed in a similar manner. Thus, the outer jacket 20 may have opposed first and second ends 22a, 22b (Figs. 4 and 5), and the optical fiber subunits 14 may have opposed first and second end portions 24a, 24b extending from the respective first and second ends of the outer jacket. In existing cable assembly designs, the outer jacket 20 has a continuous construction extending between its first and second ends 22a, 22b. Fig. 3 schematically illustrates such a conventional design. In the cable assemblies provided by the present disclosure, the outer jacket 20 includes sections having different constructions along the length of the outer jacket. This can be better appreciated with reference to the schematic and perspective views of Figs. 4 and 5, which illustrate the entire cable assembly 10.

As shown in Figs. 4 and 5, the outer jacket 20 includes first and second sections 30, 32 and an intermediate section 34 between the first and second sections. The first and second sections 30, 32 represent end sections of the outer jacket 20 in this embodiment given that the first and second sections include the respective first and second ends 22a, 22b of the outer jacket. A first outer layer of material defines the outer jacket 20 in the first and second sections 30, 32, whereas a second outer layer of material defines the outer jacket 20 in the intermediate section 34. The second outer layer of material is different than the first outer layer of material and, in some embodiments (like the ones shown), configured such that the intermediate section 34 has an outer diameter less than an outer diameter of the first and second sections 30, 32.

For example, the first outer layer of material may be a mesh material (also referred to as a "snake skin" or "snake jacket" because of the mesh configuration). The mesh material, which may be constructed from one or more polymers, may be split (or configured to be split) to allow easy removal of one or more of the optical fiber subunits 14 from the cable 12 when needed. This may be necessary when one of the free end portions 24a, 24b of one of the optical fiber subunits 14 is not long enough to reach an intended coupling location on a piece of equipment. Exposing additional length of the optical fiber subunit 14 in question from the outer jacket 20 may provide the optical fiber subunit 14 with the necessary freedom to reach the intended coupling location.

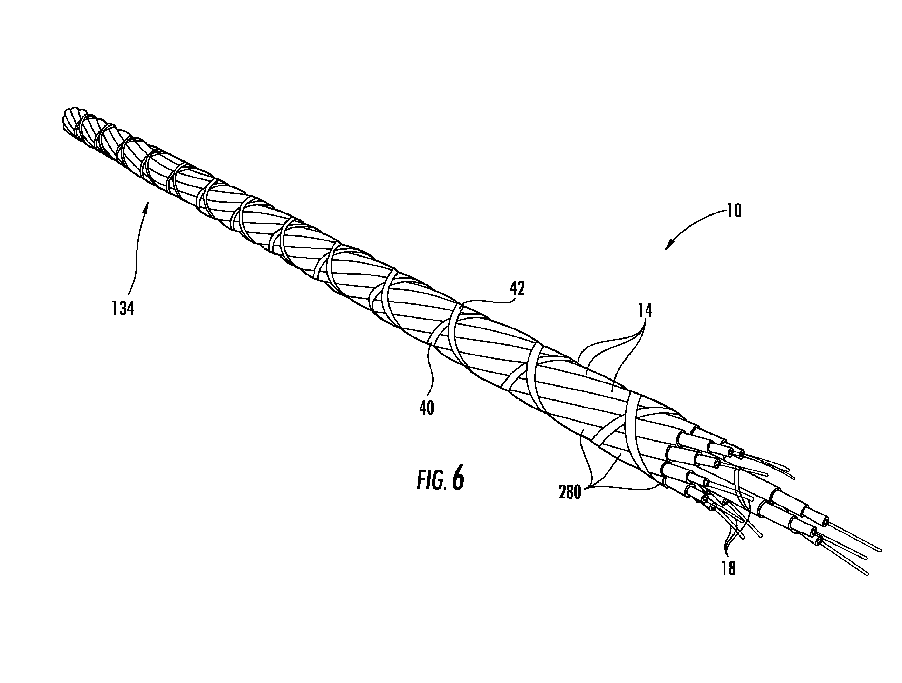

Conversely, the second outer layer of material may be better configured to keep the optical fiber subunits 14 bundled together within the outer jacket 20. For example, the second outer layer of material may be a fire-resistant polymer material that has been extruded over portions of the optical fiber subunits 14 to form the first and second sections 30, 32 of the outer jacket 20. Alternatively, the second outer layer of material may comprise one or more elongate binders helically wound about a periphery of the optical fiber subunits 14. Such binders are typically formed from elongate tensile yarns and are discussed in detail in U.S. Patent No. 8,565,565 ("the '565 patent). Fig. 6 reproduces one of the drawings from the '565 patent.

As described in the '565 patent and shown in Fig. 6, the first outer layer of material may comprise a pair of binders 40, 42 wrapped about the optical fiber subunits 14. More specifically, the optical fiber subunits 14 may arranged in one or more layers and be stranded together (e.g., in an SZ stranding pattern). The binders 40, 42 may then be oppositely helically wound (i.e., contra-helically stranded) about the optical fiber subunits 14. Any suitable elongate tensile yarn may be used for the binders 40, 42, such as aramid, fiberglass, or polyester. Additionally, although Fig. 6 shows twelve optical fiber subunits 14 in a "9-3" arrangement (an inner layer of three optical fiber subunits surrounded by an outer layer of nine optical fiber subunits), other numbers and arrangements of optical fiber subunits are possible.

As mentioned above, in some embodiments the second outer layer of material may be configured so that the intermediate section 34 (Figs. 4 and 5) has an outer diameter less than an outer diameter of the first and second sections 30, 32. For example, both possibilities mentioned above for the second outer layer of material i.e., an extruded fire-resistant polymer or helically-wound tensile yarns can be configured to have a smaller outer diameter than the possibility mentioned above for the first outer layer of material i.e., the split-mesh material. Other material/construction combinations for the first and second outer layers of material to provide this relationship will be appreciated by skilled persons.

Because the outer diameter of the intermediate section 34 is reduced compared to the first and second sections 30, 32, the cable assembly 10 may be smaller than conventional designs that use a single material/construction for the outer jacket 20. The reduction in size may enable cable trays and other supporting hardware (not shown) to accommodate a greater number of cable assemblies than might otherwise be possible. Furthermore, the reduction in size is typically accompanied by a reduction in weight, thereby making the cable assemblies 10 easier to handle.

Additional advantages may be obtained when using the helically-wound binders 40, 42 as the second outer layer of material and a split mesh material as the first outer layer of material. In particular, the binders 40, 42 are typically much less expensive than the split mesh material. The binders 40, 42 may also facilitate forming the cable assembly 10. For example, during or after stranding the optical fiber subunits 14, the binders 40, 42 may be applied to hold the optical fiber subunits 14 together. The binders 40, 42 may be applied over a long length of the cable 12, possibly longer than what will eventually correspond to the intermediate section 34 of the outer jacket 20, to facilitate handling prior to and during completion of the cable assembly 10. The binders 40, 42 may be applied in an automated manner using appropriate equipment.

The split mesh material may then be applied over portions of the optical fiber subunits 14 to form the first and second sections 30, 32 of the outer jacket 34. Applying the split mesh material may be a manual process, as is the case with conventional designs where the entire outer jacket is formed from such a material. However, because the first and second sections 30, 32 represent only a portion of the overall length of the outer jacket 20 in embodiments of the present disclosure, the time and effort to install the split mesh material may be reduced.

Note that there may be some overlap of the split mesh material and helical binders 40, 42, but the helical binders should not extend too far into the first and second sections 30, 32. In some embodiments, such as those where the helical binders 40, 42 are initially applied over a long length of the cable 12, it may be necessary to cut or otherwise remove some of the helical binders before or after applying the split-mesh material. Limiting the overlap helps prevent the helical binders 40, 42 from making individual optical fiber subunits 14 too difficult to remove from the outer jacket 20, which may be needed for the reasons mentioned above. Although some overlap may be the result of how the cable assembly 10 is formed, it is possible for there to be little or no overlap between the split mesh material and helical binders 40, 42 in alternative embodiments.

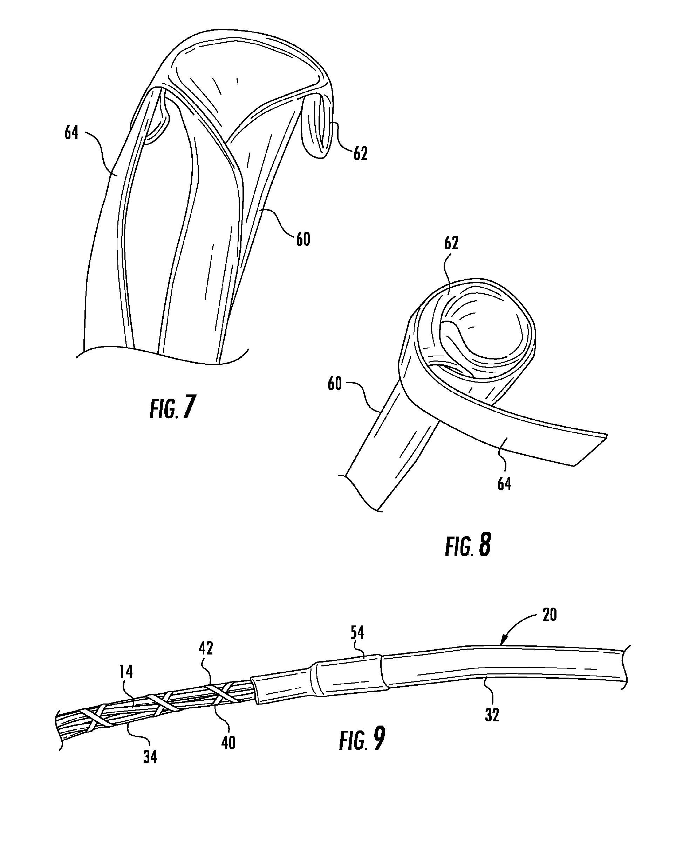

Regardless of the extent of overlap, the split mesh material of the first and second sections 30, 32 may be secured to the helical binders 40, 42 of the intermediate section 34 using heat shrinks or the like. Fig. 4 schematically illustrates heat shrinks 50, 52 applied over a portion of the first outer layer of material (i.e., the split-mesh material in the example presently being discussed) and a portion of the second outer layer of material (i.e., the helical binders in the example presently being discussed) where the intermediate section 34 joins, meets, or otherwise transitions to the first and second sections 32, 34. Both of the heat shrinks 50, 52 can also be seen in Figs. 4 and 5, and a close-up view of the heat shrink 54 can be seen in Fig. 9. Other ways of securing the first outer layer of material to the second outer layer of material at the interface/transition between intermediate section 34 and the first and second sections 30, 32 will be appreciated by skilled persons.

The opposite or "outside" ends of the first and second sections 30, 32 in the present example may be constructed to keep the split mesh closed. Figs. 7 and 8, for example, illustrate how an end portion 60 of the split mesh material may be folded back onto itself to form a collar 62, and how a piece of double-sided Velcro® or other fabric fastener 64 may be inserted into the collar and wrapped around the outer jacket 20. Such a construction enables the split mesh material to be kept closed during normal use, but opened when removing an additional length of one of the optical fiber subunits 14 from the outer jacket 20. The amount of additional length that can be removed is then limited by one of the heat shrinks 50, 52 (or other form of secure connection in alternative embodiments). This addresses one of the drawbacks sometimes associated with conventional designs that only have a split mesh material as the outer jacket 20. In such conventional designs, it can be difficult to control the amount of the optical fiber subunit(s) that get removed from the outer jacket 20. After removing a desired length of the fiber subunit(s) 14, there is a risk that the optical fiber subunit(s) fall out or otherwise separate from the outer jacket 20 over a longer length than intended.

As can be appreciated, the cable assembly 10 in the specific example just described does not include any any furcation plugs formed from a heat-cured adhesive (e.g., epoxy) or molded material. These and other embodiments, the cable assembly 10 can be constructed in a quick and efficient manner. Moreover, the lack of furcation plugs helps keep the maximum outer diameter of the outer jacket 20 small, which may facilitate pulling the cable assembly 10 through small spaces (with a pulling grip; not shown).

The above-mentioned advantages-both those general to all embodiments and those specific to the examples described-may be especially prominent when the cable assembly is configured with the intermediate section 34 representing a majority of an overall length of the outer jacket 20. In other words, the intermediate section 34 may define at least 50% of an overall length of the outer jacket 20. In some embodiments, the percentage may be as high as 80% or even 90%. Conversely, the first and second sections 30, 32 of the outer jacket 20 represent less than a majority of the overall length. Each of the first and second sections 30, 32 may, for example, define between 1% and 25% of the overall length of the outer jacket 20 in some embodiments.

Persons skilled in optical connectivity will appreciate additional variations and modifications of the apparatuses and methods already described. For example, although first and second sections 30, 32 are shown and described as being end sections of the outer jacket 20, in alternative embodiments the outer jacket 20 may include additional sections on either side of the first and second sections 30, 32 with such additional sections having a different construction than the first, second, and/or intermediate sections 30, 32, 34. Additionally, although a specific example of the cable assembly 10 is described as not including any furcation plugs (i.e., cured adhesive or molded structures securing the optical fiber subunits 14 and outer jacket 20), in alternative embodiments there may be one or more furcation plugs (e.g., on the inner and/or outer ends of the first, second, and/or intermediate sections 30, 32, 34 of the outer jacket 20).

Additionally, where a method claim below does not actually recite an order to be followed by its steps or an order is otherwise not required based on the claim language, it is no way intended that any particular order be inferred.

## Claims

1. An optical fiber cable assembly (10), comprising:
a cable (12) having:
a plurality of optical fiber subunits (14) that each include at least one optical fiber (18); and
an outer jacket (20) surrounding the plurality of optical fiber subunits (14), wherein each optical fiber subunit (14) includes opposed first and second end portions (24a, 24b) that extend from respective first and second ends (22a, 22b) of the outer jacket (20); and
a plurality of optical connectors (16) mounted the optical fibers (18) of the optical fiber subunits (14) to terminate the at least one optical fiber (18) of each optical fiber subunit (14);
wherein the outer jacket (20) of the cable (12) includes first and second sections (30, 32) and an intermediate section (34) between the first and second sections (30, 32), the first and second sections (30, 32) having a first outer layer of material defining the outer jacket (20), the intermediate section (34) having a second outer layer of material defining outer jacket (20), and the second outer layer of material being different than the first outer layer of material.

2. The optical fiber cable assembly of claim 1, wherein the second outer layer of material is configured such that the intermediate section of the outer jacket has an outer diameter less than an outer diameter of the first and second sections of the outer jacket.

3. The optical fiber cable assembly of either claim 1 or 2, wherein the second outer layer of material comprises an extruded fire-resistant polymer material.

4. The optical fiber cable assembly of either claim 1 or 2, wherein the second outer layer of material comprises elongate tensile yarns helically wound about a periphery of the plurality of optical fiber subunits.

5. The optical fiber cable assembly of any of claims 1-4, wherein the first outer layer of material comprises a split mesh material.

6. The optical fiber cable assembly of any of claims 1-5, wherein the intermediate section of the outer jacket extends from the first section of the outer jacket to the second section of the outer jacket, and wherein the cable further comprises heat shrinks securing the first outer layer of material to the second outer layer of material where the intermediate section meets the first and second sections.

7. The optical fiber cable assembly of any of claims 1-6, wherein the cable does not include any furcation plugs formed from a heat-cured adhesive or molded material.

8. The optical fiber cable assembly of any of claims 1-7, wherein the intermediate section of the outer jacket defines at least 50% of an overall length of the outer jacket.

9. The optical fiber cable assembly of any of claims 1-8, wherein the first and second sections of the outer jacket each define between 1% and 25% of an overall length of the outer jacket.

10. The optical fiber cable assembly of any of claims 1-9, wherein the plurality of optical fiber subunits are stranded within the intermediate section but not in the first and second sections.

11. The optical fiber cable assembly of any of claims 1-10, wherein the first and second sections of the outer jacket define respective first and second ends of the outer jacket.

12. A method of forming the optical fiber cable assembly of any of claims 1-11, the method comprising:
applying the second outer layer of material to the plurality of optical fiber subunits to form the intermediate section of the outer jacket; and
applying the first outer layer of material to the plurality of optical fiber subunits to form the first and second sections of the outer jacket.

13. The method of claim 12, further comprising:
stranding the plurality optical fiber subunits together prior to or while applying the first outer layer of material to the plurality of optical fiber subunits.

14. The method of either claim 12 or 13, wherein the intermediate section of the outer jacket extends between the opposed end sections, the method further comprising:
securing the first outer layer of material to the second outer layer of material with heat shrinks where the intermediate section meets the first and second sections.

15. The method of any of claims 12-14, wherein the first outer layer of material comprises a split mesh material, and wherein the first and second sections of the outer jacket define respective first and second ends of the outer jacket, the method further comprising:
folding an end portion of the first section to form a collar with the split mesh material;
inserting piece of fabric fastener at least partially into the collar; and
wrapping the piece of fabric fastener around an exterior of the collar, wherein the fabric fastener adheres to itself when wrapped around the collar to hold the split mesh material in a closed configuration at the first end of the outer jacket.
